# EUROPEAN PATENT APPLICATION

(11) **EP 4 563 965 A1**
(43) Date of publication of application: **04.06.2025**
(21) Application number: 24306927.5
(22) Date of filing: 18.11.2024
(51) Int. Cl.: G01N 1/06, G01N 21/89, G01N 1/28

(54) **QUALITY CONTROL METHOD FOR A CABEL SPECIMEN**

(30) Priority: 29.11.2023 NO 20231296; 02.02.2024 NO 20240096
(71) Applicant: Nexans, 92400 Courbevoie (FR)
(72) Inventor: DOEDENS, Espen, 92400 COURBEVOIE (FR); JARVID, Erik Markus, 92400 COURBEVOIE (FR)
(74) Representative: Onsagers AS

(57) **Abstract**

The present invention relates to a method of performing an automatized quality check of a cable specimen 10, which method comprises peeling of at least a part of the cable specimen 10 and receiving a peeling sample 14, spooling the peeling sample 14 onto a receiving roll, performing a measurement on a spot of the peeling sample 14, which spot is located ahead the receiving roll, wherein the measurement comprises a non-destructive testing. The present invention also relates to a method of performing an automatized quality check of a cable specimen, which method comprises a roll-to-roll spooling, wherein the measurement comprises a non-destructive testing. Further, the present invention relates to a digital twin of a cable specimen. Even further, the present invention relates to a use of the method.

## Description

### FIELD OF THE INVENTION

The present invention relates to a method of performing an automatized quality check of a cable specimen, which method comprises peeling of at least a part of the cable specimen and receiving a peeling sample, spooling the peeling sample onto a receiving roll, performing a measurement on a spot of the peeling sample, which spot is located ahead the receiving roll, wherein the measurement comprises a non-destructive testing. The present invention also relates to a method of performing an automatized quality check of a cable specimen, which method comprises a roll-to-roll spooling, wherein the measurement comprises a non-destructive testing. Further, the present invention relates to a digital twin of a cable specimen. Even further, the present invention relates to a use of the method.

### BACKGROUND

High-voltage electric power transmission systems have become of increased significance in the energy transition as these systems enable long distance energy connections which could help to deal with the fluctuations of wind power and photovoltaics.

High voltage cables typically comprise a central electrical conductor, mostly aluminum or copper, and successively and coaxially around this electrical conductor, a semiconductive inner layer, an electrically insulating intermediate layer, a semiconducting outer layer. These layers are based on polymer(s), which can be crosslinked or not.

A key factor for high voltage cables concerns the insulating material surrounding the metal conductor in the center of the cable. Considerable research and development efforts have been spent to improve the insulating material. In the course of these efforts it requires to analyze samples of the insulating material. The aim is to investigate cable health which may vary with the radial, longitudinal and angular location in the cable insulation.

In one approach a re-melting of segments of cable insulation into plates have been performed. However, firstly the method can only be performed with non-XLPE insulating materials as the cross-linked insulating materials cannot be remelted, secondly the melting affects morphological insulation properties. Typically, such methods are performed with virgin pellet materials. However, the method allows no approach in investigating cable health. Cutting peelings and thin parts from the full samples is thus preferred, as it only requires short cable segments and provides spatial resolution. The main alternatives to peelings are e.g. slicing or CNC milling which however results in much thicker specimens. Samples can further be obtained by microtomy, where one receives very small samples, which are not distributed around the cable.

There is a need of improving the analysis of the characteristics of the samples. There is further a need for increasing the degree of automatization of analyzing samples from a high voltage cable.

There is the wish of preparing a digital twin of a cable, which means that a digital model of a cable is established wherein the characteristics of the cable depending on an arbitrary position within the cable can be retrieved from a computer upon demand. It was in particular of interest to (digitally) map shape and position of defects, particles, pollutants, organic contaminants, agglomerates voids, degradation patterns, discolored areas, phase separated regions (e.g. thermoplastic blends), aged regions, interfaces (chemically bonded ones like in the factory joint), etc. to map such in 3D and also to map the statistics on such features (sizes, positions, distributions, amounts etc.).

Problems solved by the invention relate to the provision of a method addressing and fulfilling the above formulated needs. In particular, a problem solved by the invention relates to the provision of a method which enables an improvement of automatization of the analysis of full cable samples. The degree of automatization should be increased. Further, the method should allow to precisely link a spot on the sample to the spatial position in the high voltage cables.

### SUMMARY OF THE INVENTION

The invention's underlying problems are solved by the subject-matter of claim 1. A first aspect of the invention therefore relates to a method of performing an automatized quality check of a cable specimen, which method comprises
- peeling of at least a part of the cable specimen and forming a peeling sample,
- spooling the peeling sample onto a receiving roll,
- performing a measurement on a spot of the peeling sample, which spot is located on the peeling sample ahead the receiving roll,
wherein the measurement comprises a non-destructive testing.

The invention's underlying problems are solved by the subject-matter of claim 2. A second aspect of the invention therefore relates to a method of performing an automatized quality check of a cable specimen, which method comprises
- peeling of at least a part of the cable specimen and receiving a peeling sample,
- collecting the peeling sample on a collector roll,
- spooling the peeling sample from the collector roll onto a receiving roll,
- performing a measurement on a spot of the peeling sample, which spot being on the peeling sample between the collector roll and the receiving roll,
wherein the measurement comprises a non-destructive testing.

The methods refer to an improvement of an automatized quality check of a cable specimen. In one step, a peeling of at least a part of a cable specimen is performed. In doing so, a peeling sample is received. The peeling sample is then gathered on a roll. In case of the method according to the first aspect, the peeling sample is spooled onto a receiving roll. In case of the method according to the second aspect, the peeling sample is firstly collected on a collector roll. The collector roll functions in this method, besides other functions, as a measure to temporarily storage the peeling sample. The peeling sample can be subjected to a treatment while being on the collector roll. Typically, the collector roll serves as a temporary storage form. The collector roll is not necessarily a cylindrical piece of support on which the peeling sample is winded, it can by any type of support on which the peeling sample is winded. For the treatment, the peeling sample can be as it is, i.e. without any support, e.g. self-supported. The treatment can be a physical or chemical treatment.

In one step, the methods comprise performing a measurement on a spot of the peeling sample, which spot is located, in case of the method according to the first aspect of the invention, ahead the receiving roll, respectively which spot is located, in case of the method according to the second aspect of the invention, between the collector roll and the receiving roll. A skilled person will understand that the measurement can be performed if the peeling sample is spatially accessible for performing the measurement. While the peeling sample is spooled on the roll, the inner layers of the wound peeling sample were not accessible for an automated analysis.

The method step of performing the measurement on a spot of the peeling sample can be done while spooling, but not necessarily. This is because the step of spooling can be interrupted while the measurement is actually performed. The step of performing the measurement can however be done while spooling at the same time. Particularly optical measurements do not necessarily require that the movement of the peeling sample due to spooling is interrupted.

The difference between the method according to the first aspect and the method according to the second aspect basically refers to following: In the method according to the first aspect, the measurement is performed immediately after the peeling to the cable specimen right after the peeling sample is received. In the method according to the second aspect, the received peeling sample is firstly collected on the collector roll. The measurement is performed when the peeling sample is spooled from the collector roll to the receiving roll. The method according to the second aspect of the invention is the analysis which is designated as roll-to-roll analysis.

The term "spot being between the collector roll and the receiving roll" refers to the place where the measurement is performed. It is immediately clear for a skilled person that the peeling sample must be accessible to the measurement. That is not the case when the peeling sample is wound on one of the rolls. When the peeling sample is moved from the collector roll to the receiving roll, the peeling sample is accessible for a measurement.

The term "spot" means place of the inspected piece of peeling sample. The size of the spot may vary depending on the type of measurement. In case of an visual optical inspection, the spot may have the size of some square millimeters, In case of mechanical strength measurements, the spot may comprise some centimeters in the lengthwise direction of the peeling sample strap. Depending on zoom and megapixels it can also be set to match the width of the peeling specimen. In case of optical inspections, the inspection can be in the visible spectrum, in the UV spectrum and/or in the IR spectrum. A hyper-spectral analysis can be used.

The term "non-destructive measurement" (NDT) means that the peeling sample being a strap must not be destroyed. In case the peeling sample is stretched without an intended breaking, the respective measurement is still a "non-destructive measurement".

In a method alternative to the inventive method, a peeling sample is guided through an oil bath. Such a method is performed with a setup which enable the guiding of the cable specimen through an oil bath. The present method replaces the oil-bath inspection of cable samples, which is commonly performed on XLPE-insulated samples to detect contaminants. The peeling sample roll-to-roll approach would make this cheap and convenient enough to be feasible. It could, in addition, be used to make such a quality inspection on an insulation system which is not transparent enough for the oil-bath inspection or a thermoplastic insulation which would dissolve or deform in a heated oil bath. It is acknowledged herewith that the oil bath is not needed in case of the present invention. State-of-the-art analysis techniques for cable inspections make use of an oil bath. The present method is an alternative to oil bath because the thin XLPE or PE or PP peeling specimens become transparent in the optical spectrum.

In one aspect, the method further comprises the steps of
- before the step of peeling of at least the part of the cable specimen and receiving the peeling sample, marking the cable specimen,
- during the step of spooling, detecting the marking on a lengthwise position of the peeling sample, and/or
- optionally measuring the thickness of the peeling sample, wherein preferably measuring the thickness of the peeling sample is performed by an ultrasound technique, a mechanical thickness gauging head, a caliper wheel or an optical technique.

The preferred method firstly enables a mapping of every spot on the peeling sample and correlating the spot to a spatial position in the cable material. The making can be produced by drilling a hole in the direction of the center of the electric cable. When performing the peeling of the cable, the marking is visible on the obtained peeling sample. When counting the markings in the lengthwise direction of the cable, one may link the position of the peeling sample to the spatial position in the cable. The hole can be drilled or hot stamped on the side so that it becomes a notch on the peeling, or in the middle. When the peeling sample is spooled, the marking is detected on a lengthwise position of the peeling sample in order to trace back the position of a spot in the cable specimen.

The step of measuring the thickness is optional because the thickness is roughly known from the adjustment of the peeling. However, for accuracy reasons, the thickness can be measured after the peeling. It is apparent for a skilled person that the information on the thickness of the peeling sample is necessary to calculate the position of a spot in the cable specimen.

In one aspect, the method further comprises, by making use of a control unit, correlating the marking on the lengthwise position of the peeling sample to a spatial portion of the cable specimen, preferably correlating the marking on the lengthwise position of the peeling sample together with the measured thickness of the peeling sample to a spatial portion of the cable specimen. The preferred method enables the generating the digital twin: By correlating the marking on the lengthwise position of the peeling sample to a spatial portion of the cable specimen, it is possible to correlate the result of the measurement with the spatial portion of the cable specimen. The property at the spot of measuring is the property of the spatial position in the cable specimen.

This preferred method improves the degree of automatization. When the marking is detected and the thickness is either known from the way of peeling or measured after peeling, the exact position of the spot within the cable specimen before peeling can be traced back.

In one aspect, the method further comprises
- reiterating the step of performing the measurement on distinguishing spots of the peeling sample,
- collecting data resulting from the measurements on distinguishing spots of the peeling sample, and
- optionally merging the collected data to shape a digital twin of the cable specimen.

The step of reiterating the step of performing the measurement on distinguishing spots of the peeling sample enables obtaining information on properties of the cable specimen in distinguishing positions of the cable specimen. When collecting the data resulting from the measurement on distinguishing spots of the peeling sample, the data can be recalled when needed at a later stage. The collected data can be merged. The step of merging the collected data is preferably performed by making use of the control unit. Merging the collected data enables shaping of the digital twin of the cable specimen. An arbitrary position of the digital twin of the cable specimen enables recalling the measured property at that arbitrary position.

In one aspect, the cable specimen is a high voltage cable specimen, preferably an XLPE high voltage cable specimen. In one alternative aspect, the peeling sample consists of a thermoplastic material, an ethylene propylene rubber, or a material comprising a nanofiller.

In one aspect, prior to the non-destructive testing, the peeling sample is subjected to a chemical or physical treatment, wherein preferably the chemical treatment comprises a step of soaking a chemical substance, most preferred a dye, into the peeling sample or a step of deposition of a chemical substance onto the surface of the peeling sample; or wherein preferably the physical treatment comprises the step of freezing the peeling sample or the step of drying the peeling sample. In one aspect the chemical and physical treatment is performed.

The chemical or physical treatment prepares the cable specimen to the measurement. One main goal refers to the detection of defects or other irregularities, where a part of the cable specimen distinguishes from the surrounding of that part. In order to investigate this, the cable specimen is subj ected to such treatment. The most preferred method step of chemically treating the peeling sample is done by a dye as e.g. methylene dye. The chemical treatment visualizes the defects, particles, pollutants, organic contaminants, agglomerates voids, degradation patterns, miscoloured areas, phase separated regions (e.g. thermoplastic blends), aged regions, interfaces (chemically bonded ones like in the factory joint), irregularities etc..

In one aspect, the non-destructive testing comprises at least one of the following: an x-ray analysis; an optical measurement, in particular an optical defect inspection, an IR measurement in transmission, an IR measurement in reflection or a hyper spectral analysis; a measurement of a mechanical property, in particular F5 strength; wherein the optical defect inspection is most preferred. In case of optical inspections, the inspection can be in the visible spectrum, in the UV spectrum and/or in the IR spectrum. A hyper-spectral analysis can be used.

The optical measurement can be performed by making use of a camera which is connected to a control unit. The optically visible constitution can thus be recorded. While the spooling of the peeling sample roll-to-roll, the optical investigation is performed at a place where the peeling sample is between the rolls.

In one aspect, the step of spooling is intermitted during the step of performing the measurement.

At least the receiving roll is driven by a motor such that the spooling is performed. Some investigation methods require time for an individual measurement on one spot. Therefore, the spooling is interrupted for conducting an individual measurement. This is meant by the term that the spooling is intermitted. It is however also possible that the spooling is continued while performing a measurement. This is on the one hand feasible in cases where the kind of measurement does not require an intermitted spooling or in cases where the device for performing the actual measurement moves with the moving peeling sample due to the step of spooling.

Thus, in one aspect, the step of spooling is continued during the step of performing the measurement. This step is performed in that the spooling goes on by a continued impelling of the roll while performing the measurement.

In one aspect, the step of spooling stops when the whole peeling sample has been spooled from the collecting roll to the receiving roll.

According to this preferred aspect, the finishing of the method is automatized.

In one aspect, the data is stored in a cloud.

This preferred method enables the accessibility of the data.

In one aspect, the control unit automatically generates a quality control report.

According to this preferred aspect, the degree of automatization is increased.

The methods of analyzing the peeling sample represent in-line methods of analyzing the peeling samples.

In one aspect, the method step of performing measurements is done in-line, in particular in an automated stop-and-go proceedings or in an automated continuous proceedings.

In one aspect, the optical measurement is done with magnification.

In one aspect, the method further comprises a step of coloring the roll, dying the roll or treating the roll with a chemical.

In one aspect, the method further comprises a step of detecting imperfections made used for deciding the positions for electrical tests.

In one aspect, the method makes use angular markers, thickness mapped, specimen dimensions from before the peeling, and the X,Y detection made ON the peeling in line; to reconstruct this back to the original cable position using an algorithm or a calculation method.

The invention's underlying problems are further solved by the subject-matter of claim 14. A third aspect of the invention refers to a digital twin of a cable specimen, which digital twin is obtained by a method of the invention.

In one aspect, the data defining the digital twin is recorded on an electronic medium.

The invention's underlying problems are further solved by the subject-matter of claim 15. A fourth aspect of the invention refers to the use of a method according to any one of claims 1 to 14 to form a digital twin of the cable specimen; particularly to form a digital twin of the cable specimen showing position and shape of defects, particles, pollutants, organic contaminants, agglomerates, voids, degradation patterns, miscoloured areas, phase separated regions, thermoplastic moieties, aged regions, interfaces, or the like.

The peeling of the cable can be performed by any known method of peeling. The step of peeling results in obtaining a peeling sample. In the following, a device for performing a peeling method is disclosed:
Disclosed herewith is a fourth aspect which relates to a device for peeling a cable specimen, wherein the device comprises at least three rollers for holding the cable specimen which rollers being arranged in a roller plane, a knife arranged in the roller plane in a set distance to a first roller of the at least three rollers, and a motor enabling rotation of the cable specimen. The device enables performing the peeling step.

In one aspect, the method step of peeling is performed by a lathe comprising a drive unit which comprises a motor impelling the cable specimen to the rotation. The impelling of the cable means that the cable is caused to the movement of rotation. The motor effects that the cable rotates, i.e. essentially turns around its longitudinal rotation axis. The motor causes the rotation of the cable specimen.

In one aspect, impelling the cable specimen to the rotation causes a drift unit fixed with a knife for peeling to perform the step of moving the knife along the path towards the rotation axis of the cable specimen such that the peeling is performed.

This preferred method uses a motor for causing the cable specimen to rotate which again causes the drift unit to perform the step of moving. The motor drives both the rotation of the cable specimen and the longitudinal movement of the drift unit.

In one aspect, the drive unit and the drift unit mechanically communicate with one another in that the rotation of the cable specimen induces a force transmission to a worm gear comprising a worm thread having fixed thereon the knife, wherein the force transmission induces the step of moving the knife.

In one aspect, the drive unit and the drift unit mechanically communicate with one another in that the drive unit causes the rotation of the cable specimen and the drive unit induces a force transmission to a worm gear comprising a worm thread having fixed thereon the knife, wherein the force transmission induces the step of moving the knife.

The use of the worm gear is associated with the beneficial effect that the thickness of the obtained peeling sample can be adjusted in a stepwise manner.

In one aspect, the rotation of the cable specimen is related to a force transmission via a surface speed measurement device arranged on the surface of the cable specimen.

In one aspect, the worm gear has a worm gear ratio of between 2:1 to 1:32, preferably 1:1, 1:2, 1:4, 1:8 or 1:16 and a thread pitch of the worm of 0.5 to 5 mm.

By setting the worm gear ratio, it is possible to adjust the speed of the drift unit in relation to the speed of rotation of the cable specimen. Typically, the worm thread rotates slower than the cable specimen, but all ratios between 2:1 to 1:32, or even more, can be reasonable depending on the thread pitch of the worm. The rations are determined between the cable rotation and the knob of the in built tool. In case of the 1:32 worm gear ratio, the worm rotates one time each 32 full cable rotations. The rotation of the worm makes the knife move forward. The extend of the movement in the forward direction depends on the thread pitch, which is the knife feed rate per its rotation. According to the preferred aspect, the thread pitch of the worm is 0.5 to 5 mm, which means that the worm moves forward 0.5 to 5 mm when the worm turns one time; in other words, the thread pitch is 0.5 to 5 mm per turn of the thread pitch.

In one aspect, the peeling comprises the step of holding the cable specimen which comprises further clamping the cable specimen between one or two lathe chucks. The preferred method enables a tight fastening of the cable specimen.

In one step, the received peeling sample collected on a collector roll. The constant pulling force exerted by the collector roll ensures that the peeling sample is not over-stretched, but tight wrapped on the collector roll. In fact, it is slightly stretched so it is neatly and stably removed such that it comes away from the knife. This yields a more stable cutting process having an influence on an improved uniform thickness.

In one aspect, the step of collecting is performed by force transmission from the drive unit to the collector roll. It is beneficial to have only one unit for propulsion of all moving parts when applying the method.

In one aspect, the step of collecting is performed by force transmission from the drive unit to the collector roll applying a torque limiter coupling.

The application of the torque limiter ensures that the pulling force to the peeling sample is constant.

In one aspect, the method further comprises the step of stopping the method before the knife comes into contact with the cable conductor of the cable specimen.

This preferred method provides an increased degree of automatization.

Features being solely disclosed in connection with the method of the invention are deemed to be disclosed in connection with the digital twin or use of the invention and vice versa. Further, feature being solely disclosed in connection with the device of peeling the cable specimen are deemed to be disclosed in connection with the method, the digital twin or the use of the invention.

### BRIEF DESCRIPTION OF THE DRAWING

Certain aspects of the presently disclosed subject-matter will be described with reference to the accompanying drawings, which are representative and schematic in nature and are not be considered to be limiting in any respect as it relates to the scope of the subject-matter disclosed herein:
Figure 1 depicts a schematic device for preparing a peeling sample.
Figure 2 depicts an automated analysis device according to the invention for measuring properties of the peeling sample.

### DESCRIPTION OF EMBODIMENTS

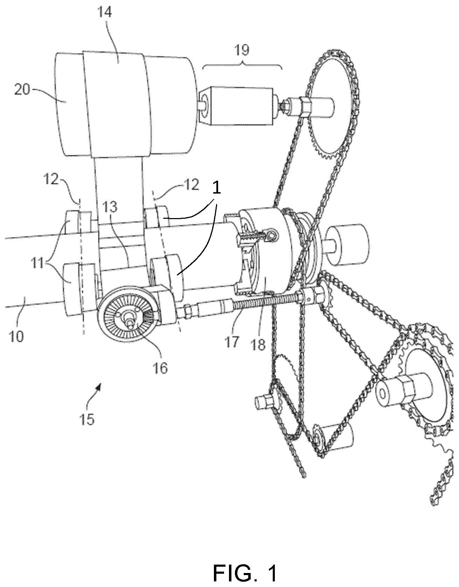

Figure 1 shows a device for peeling a cable specimen 10. The rollers 11 arranged in a roller plane 12 hold the cable specimen 10. Fig. 1 shows a preferred device in which six rollers 11 are implemented, wherein two rollers are hidden by the cable specimen 10. Accordingly, the preferred device shows two roller planes 12. Two lathe chucks 18 (only one of which is shown in Fig. 1) hold the cable specimen 10. A drive unit 21 induces the rotation of the cable specimen 10 and also a force transmission device 17. The drift unit 15 receives an impact via a worm gear 16 from the force transmission device 17 such that the knife 13 cuts the cable specimen 10 and the peeling sample 14 is obtained. The drive unit 21 also impels a shaft causing a collector roll 20 to rotate. The torque limiter 19 causes that the collector roll 20 pulls with a constant force on the obtained peeling sample 14.

The device of Fig. 1 can be used for performing the step of peeling. According to the first aspect of the invention, the step of measurement is performed after the cable specimen is peeled and before the received peeling sample 14 onto roll 20. Fig. 1 does not show any equipment for measurement.

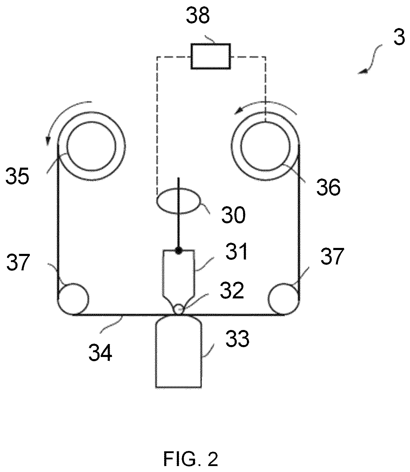

Fig. 2 shows an analysis device 3 according to the invention which enables an automated measurement of properties of a peeling sample. In the example of Fig. 2, an optical measurement can be performed. The peeling sample under analysis 34 is moved from the collector roll 35 via a deflection roller 37 through a gap where an optical measurement is performed via a second deflection roller 37 to a receiving roll 36. The movement is performed by a drive unit which can be an integral part of the receiving roll 36. The optical analyzer 31 has a lens 32 for magnification of the spot under analysis. A recording unit 30 can record images and send data to the control unit 38. The control unit 38 can store data of the measurement and also control the movement the peeling sample. The movement of the peeling sample can be performed by way of stop-and-go but also in a continuous manner. The support 33 of this exemplary set-up comprises a notch detector (not explicitly shown), which serves for tracing back the position of a spot of the peeling sample to the spatial position in the cable specimen. Different to what is shown in Fig. 2, there is typicilly no contact between lens and the peeling sample as the lens has certain focal length. Regarding reflective versus transmissive non-destroying techniques (NDT), it is disclosed herewith that in some cases, the illumination can come from behind the sample, (i.e. sender and receiver on opposite sides,) while in other optical NDT the sender and receiver(sensor) are on the same side, sometimes integrated into the same device. Data of the gadget which gathers information on the markings is transformed (not shown by a dotted line from the gadget to the control unit in Fig. 2) to the control unit 38.

### REFERENCE LIST

- 10: Cable specimen
- 11: Rollers
- 12: Roller plane
- 13: Knife
- 14: Peeling sample
- 15: Drift unit
- 16: Worm gear
- 17: Force transmission device
- 18: Lathe chuck
- 19: Torque limiter
- 20: Collector roll
- 21: Drive unit

- 3: Analysis device
- 30: Recording unit
- 31: Optical analyzer
- 32: Lens
- 33: Support with notch detector
- 34: Peeling sample under analysis
- 35: Collector roll
- 36: Receiving roll
- 37: Deflection roller
- 38: Control unit

## Claims

1. A method of performing an automatized quality check of a cable specimen (10), which method comprises
a) peeling of at least a part of the cable specimen (10) and forming a peeling sample (14),
b) spooling the peeling sample (14) onto a receiving roll,
c) performing a measurement on a spot of the peeling sample (14), which spot is located on the peeling sample (14) ahead the receiving roll,
wherein the measurement comprises a non-destructive testing.

2. A method of performing an automatized quality check of a cable specimen (10), which method comprises
a) peeling of at least a part of the cable specimen (10) and receiving a peeling sample (14),
b) collecting the peeling sample (14) on a collector roll (35),
c) spooling the peeling sample from the collector roll (35) onto a receiving roll (36),
d) performing a measurement on a spot of the peeling sample (14), which spot being on the peeling sample (14) between the collector roll (35) and the receiving roll (36),
wherein the measurement comprises a non-destructive testing.

3. The method according to claim 1 or claim 2, wherein the method further comprises the steps of
• before the step of peeling of at least the part of the cable specimen (10) and forming the peeling sample (14), marking the cable specimen (10),
• during the step of spooling, detecting the marking on a lengthwise position of the peeling sample (10), and/or
• optionally measuring the thickness of the peeling sample (14), wherein preferably measuring the thickness of the peeling sample (14) is performed by an ultrasound technique, a mechanical thickness gauging head, a caliper wheel or an optical technique.

4. The method according to claim 3, wherein the method further comprises, by making use of a control unit (38), correlating the marking on the lengthwise position of the peeling sample (14) to a spatial portion of the cable specimen (10), preferably correlating the marking on the lengthwise position of the peeling sample (14) together with the measured thickness of the peeling sample (14) to a spatial portion of the cable specimen (10).

5. The method according to claim 4, wherein the method further comprises
• reiterating the step of performing the measurement on distinguishing spots of the peeling sample (14),
• collecting data resulting from the measurements on distinguishing spots of the peeling sample (14), and/or
• optionally merging the collected data to shape a digital twin of the cable specimen (10).

6. The method according to any one of the preceding claims, wherein the cable specimen (10) is a high voltage cable specimen (10), preferably a crosslinked polyethylene (XLPE) high voltage (HV) cable specimen (10).

7. The method according to any one of the claims 1 to 5, wherein the peeling sample consists of a thermoplastic material, an ethylene propylene rubber, or a material comprising a nanofiller.

8. The method according to any one of claims 1 to 7, wherein prior to the non-destructive testing, the peeling sample (14) is subjected to a chemical or physical treatment, wherein preferably the chemical treatment comprises a step of soaking a chemical substance, most preferred a dye, into the peeling sample or a step of deposition of a chemical substance onto the surface of the peeling sample (14); or wherein preferably the physical treatment comprises the step of freezing the peeling sample (14) or the step of drying the peeling sample (14).

9. The method according to any one of claims 1 to 8, wherein the non-destructive testing comprises at least one of the following: an x-ray analysis; an optical measurement, in particular an optical defect inspection, an IR measurement in transmission, an IR measurement in reflection or a hyper spectral analysis; a measurement of a mechanical property, in particular F5 strength; wherein the optical defect inspection is most preferred.

10. The method according to any one of claims 1 to 9, wherein the step of spooling is intermitted during the step of performing the measurement, or wherein the step of spooling is continued during the step of performing the measurement.

11. The method according to any one of claims 2 to 10, wherein the step of spooling stops when the whole peeling sample (14) has been spooled from the collecting roll (35) to the receiving roll (36).

12. The method according to any one of claims 5 to 11, wherein the data is stored in a cloud.

13. The method according to any one of claims 5 to 12, wherein the control unit (38) automatically generates a quality control report.

14. Digital twin of a cable specimen, which digital twin is obtained by a method of claim 5, preferably wherein the data defining the digital twin is recorded on an electronic medium.

15. Use of a method according to any one of claims 1 to 13 to form a digital twin of the cable specimen (10); particularly to form a digital twin of the cable specimen (10) showing position and shape of defects, particles, pollutants, organic contaminants, agglomerates, voids, degradation patterns, miscoloured areas, phase separated regions, thermoplastic moieties, aged regions, interfaces, or the like.
